# EUROPEAN PATENT APPLICATION

(11) **EP 4 510 295 A1**
(43) Date of publication of application: **19.02.2025**
(21) Application number: 23907310.9
(22) Date of filing: 21.09.2023
(51) Int. Cl.: H01M 10/42, H01M 10/44, H01M 10/48

(54) **BATTERY SYSTEM AND PACK CONNECTION METHOD USING SAME**

(30) Priority: 23.12.2022 KR 20220183601; 19.09.2023 KR 20230124691
(71) Applicant: LG Energy Solution, Ltd., Seoul 07335 (KR)
(72) Inventor: KIM, Minsu, Daejeon 34122 (KR); KIM, Bong Soo, Daejeon 34122 (KR); AHN, Jihoon, Daejeon 34122 (KR); LEE, Changhoon, Daejeon 34122 (KR)
(74) Representative: Goddar, Heinz J.
(86) International application number: PCT/KR2023/014394
(87) International publication number: WO 2024/136024

(57) **Abstract**

Disclosed are a battery system and a pack connection method using the same, and the battery system includes: a battery device including a plurality of battery packs connected in parallel; for each of the plurality of battery packs, a plurality of switches connected in series to one of both ends of each battery pack; and a Battery Management System (BMS) for dividing the plurality of battery packs into a plurality of pack groups, determining at least one battery pack belonging to each of the plurality of pack groups, determining one pack group of the plurality of pack groups to be discharged, and transmitting a switch control signal for turning on at least one switch connected with the one pack group among the plurality of switches, and turning off the remaining switches among the plurality of switches except for the at least one switch, in which each of the plurality of battery packs includes a plurality of battery cells including metal phase lithium in each negative electrode material.

## Description

### CROSS-REFERENCE TO RELATED APPLICATION

This application is a National Phase entry pursuant to 35 U.S.C. §371 of International Application No. PCT/KR2023/014394, filed on September 21, 2023, and claims the benefit of and priority to Korean Patent Application No. 10-2022-0183601, filed on December 23, 2022, and Korean Patent Application No. 10-2023-0124691, on September 19, 2023, the entire contents of which are incorporated by reference in their entirety for all purposes as if fully set forth herein.

### TECHNICAL FIELD

The present disclosure relates to a battery system and a pack connection method using the same.

### BACKGROUND

When a battery cell included in a battery system is a secondary battery, a negative electrode material is as important as a positive electrode material in a battery. For a negative electrode of the battery, lithium metal may be used.

In a battery system that includes a battery cell with lithium metal as a negative electrode, the life of the battery may be inferior when the battery is discharged at a low discharge rate compared to discharging at a high discharge rate. Therefore, measures to improve battery life are being discussed.

The background description provided herein Is for the purpose of generally presenting context of the disclosure. Unless otherwise indicated herein, the materials described in this section are not prior art to the claims in this application and are not admitted to be prior art, or suggestions of the prior art, by inclusion in this section.

### SUMMARY

### [Technical Problem]

The present disclosure attempts to provide a battery system and a method of connecting packs using the battery system, which allow battery packs to be discharged at a discharge rate higher than a discharge rate of a battery device by using only some of a plurality of battery packs in a discharge operation of the battery device including the plurality of battery packs.

### [Technical Solution]

A battery system according to one characteristic of the present disclosure includes: a battery device including a plurality of battery packs connected in parallel; for each of the plurality of battery packs, a plurality of switches connected in series to one of both ends of each battery pack; and a battery management system (BMS) performing operations including: dividing the plurality of battery packs into a plurality of pack groups; determining at least one battery pack belonging to each of the plurality of pack groups; determining one pack group of the plurality of pack groups to be discharged; and transmitting a switch control signal for turning on at least one switch connected with the one pack group among the plurality of switches, and turning off the remaining switches among the plurality of switches except for the at least one switch, in which each of the plurality of battery packs includes a plurality of battery cells having a metal phase lithium in each negative electrode material.

The discharge rate of the battery device for supplying power required by a load connected to the battery device may be a first discharge rate, and each of the plurality of pack groups may discharges at a second discharge rate greater than the first discharge rate.

The BMS may determine the number of the plurality of pack groups by dividing a reference discharge rate for each of the plurality of battery packs by a discharge rate of the battery device, and the number of battery packs belonging to each of the plurality of pack groups by dividing the number of the plurality of battery packs by the number of the plurality of pack groups.

The BMS may determine a plurality of discharge patterns constituting a discharge pattern cycle for the plurality of pack groups such that a difference between an average rest time before discharge of any one of the plurality of pack groups and an average rest time before discharge of any other one of the plurality of pack groups is decreased.

A positive electrode material of each of the plurality of battery cells may include elemental sulfur, and the plurality of discharge patterns may include a first discharge pattern that is an order of a first pack group and a second pack group among the plurality of pack groups, and the BMS may cause the first pack group to discharge, and monitor whether at least one of the pack voltages of the at least one first battery pack belonging to the first pack group is equal to or less than a predetermined discharge voltage lower limit.

When at least one of the pack voltages of the at least one first battery pack is equal to or less than the predetermined discharge voltage lower limit, the BMS may turn off a switch connected to each of the at least one first battery pack, cause the second pack group to discharge, and monitor whether at least one of the pack voltages of the at least one second battery pack belonging to the group of second packs is equal to or less than the predetermined discharge voltage lower limit.

The BMS may turn off the plurality of switches when all of the plurality of pack groups include battery packs having voltages equal to or less than the predetermined discharge voltage lower limit.

A pack connection method of a battery system including a battery device including a plurality of battery packs connected in parallel according to another characteristic of the present disclosure includes: dividing, by a battery management system (BMS) connected to the battery device, the plurality of battery packs into a plurality of pack groups; determining at least one battery pack belonging to each of the plurality of pack groups; determining one pack group to be discharged among the plurality of pack groups; and transmitting a switch control signal to cause at least one switch connected to the one pack group among the plurality of switches to be turned on, and to cause the remaining switches among the plurality of switches except the at least one switch to be turned off, in which each of the plurality of battery packs includes a plurality of battery cells including metal phase lithium in each negative electrode material.

The discharge rate of the battery device for supplying power required by a load connected to the battery device may be a first discharge rate, and each of the plurality of pack groups may discharge at a second discharge rate greater than the first discharge rate.

The pack connection method may further include: determining the number of the plurality of pack groups by dividing a reference discharge rate for each of the plurality of battery packs by the discharge rate of the battery device; and determining the number of battery packs belonging to each of the plurality of pack groups by dividing the number of the plurality of battery packs by the number of the plurality of pack groups.

The determining of the one pack group to be discharged among the plurality of pack groups may include: determining a plurality of discharge patterns constituting a discharge pattern cycle for the plurality of pack groups such that a difference between an average rest time before discharge of any one of the plurality of pack groups and an average rest time before discharge of any other one of the plurality of pack groups is decreased.

A positive electrode material of each of the plurality of battery cells may include elemental sulfur, and the plurality of discharge patterns may include a first discharge pattern that is an order of a first pack group and a second pack group among the plurality of pack groups, and the transmitting of the switch control signal may include causing the first pack group to discharge, and monitoring whether at least one of the pack voltage of the at least one first battery pack belonging to the first pack group is equal to or less than a predetermined discharge voltage lower limit.

The pack connection method may further include, when at least one of the pack voltage of the at least one first battery pack is equal to or less than the predetermined discharge voltage lower limit, turning off a switch connected to each of the at least one first battery pack, causing the second pack group to discharge; and monitoring whether at least one of the pack voltages of the at least one second battery pack belonging to the group of second packs is equal to or less than the predetermined discharge voltage lower limit.

The pack connection method may further include, when all of the plurality of pack groups include battery packs having voltages equal to or less than the predetermined discharge voltage lower limit, turning off the plurality of switches.

### [Advantageous Effects]

According to the present disclosure, it is possible to inhibit lithium dendrite formation that may occur when the battery pack is discharged at a low discharge rate by causing the plurality of battery packs including the lithium metal battery to be discharged at a higher discharge rate than the discharge rate of the battery device for supplying power required by a load, and prevent premature degradation of each of the plurality of battery packs.

According to the present disclosure, in the case of a lithium-sulfur secondary battery among the lithium metal batteries, it is possible to inhibit the dissolution of lithium polysulfide into the electrolyte by allowing the battery to discharge to the end without resting in the middle of the discharge operation, thereby improving the life of a plurality of battery packs.

According to the present disclosure, it is possible to solve the premature degradation phenomenon at low discharge rates seen when lithium metal is used as a negative electrode through the BMS without any change in material or cell technology.

### BRIEF DESCRIPTION OF THE DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a block diagram schematically illustrating a battery system according to an exemplary embodiment.
FIG. 2 is a diagram illustrating a shape of a lithium metal surface according to a difference in stripping rate of a lithium metal battery.
FIG. 3 is a graph illustrating the relationship between a discharge rate and lifetime of a battery cell utilizing lithium metal as a negative electrode.
FIG. 4 is a flowchart of a pack connection method using the battery system according to an exemplary embodiment.
FIG. 5 is a detailed flowchart of operation S100 of FIG. 4.

### DETAILED DESCRIPTION

Hereinafter, an exemplary embodiment disclosed the present specification will be described in detail with reference to the accompanying drawings, and the same or similar constituent element is denoted by the same reference numeral regardless of a reference numeral, and a repeated description thereof will be omitted. Suffixes, "module" and "unit" for a constituent element used for the description below are given or mixed in consideration of only easiness of the writing of the specification, and the suffix itself does not have a discriminated meaning or role. Further, in describing the exemplary embodiment disclosed in the present specification, when it is determined that detailed description relating to well-known functions or configurations may make the subject matter of the exemplary embodiment disclosed in the present specification unnecessarily ambiguous, the detailed description will be omitted. Further, the accompanying drawings are provided for helping to easily understand exemplary embodiments disclosed in the present specification, and the technical spirit disclosed in the present specification is not limited by the accompanying drawings, and it will be appreciated that the present disclosure includes all of the modifications, equivalent matters, and substitutes included in the spirit and the technical scope of the present disclosure.

Terms including an ordinary number, such as first and second, are used for describing various constituent elements, but the constituent elements are not limited by the terms. The terms are used only to discriminate one constituent element from another constituent element.

In the present application, it will be appreciated that terms "including" and "having" are intended to designate the existence of characteristics, numbers, operations, operations, constituent elements, and components described in the specification or a combination thereof, and do not exclude a possibility of the existence or addition of one or more other characteristics, numbers, operations, operations, constituent elements, and components, or a combination thereof in advance.

A program implemented as a set of instructions embodying a control algorithm required to control another configuration may be installed in a configuration for controlling another configuration under a specific control condition among configurations according to an exemplary embodiment. The control configuration may process input data and stored data according to an installed program to generate output data. The control configuration may include a non-volatile memory to store a program and a memory to store data.

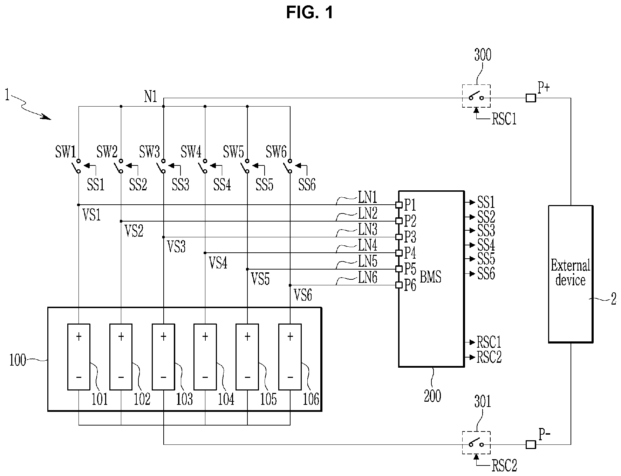

FIG. 1 is a block diagram schematically illustrating a battery system according to an exemplary embodiment.

A battery system 1 may include a battery device 100, a battery management system (BMS) 200, relays 300 and 301, and a plurality of switches SW1 to SW6.

The battery device 100 may include a plurality of battery packs 101 to 106 connected in parallel. Each of the plurality of battery packs 101 to 106 may be implemented as a plurality of two or more battery cells connected in series, a plurality of battery cells in which two or more battery cells connected in parallel are serially connected, or a plurality of two or more battery cells connected in parallel. In FIG. 1, the number of battery packs 101 to 106 and the number of switches SW1 to SW6 are illustrated to be six, but the invention is not limited thereto, and the battery system 1 may include two or more battery packs and two or more switches.

One end of each of the relays 300 and 301 is connected to the battery device 100, and the other end of each of the relays 300 and 301 is connected to at least one configuration in an external device 2. The closing and opening of the relays 300 and 301 may be controlled according to relay control signals RSC1 and RSC2 supplied from the BMS 200.

The battery system 1 may be connected to the external device 2. The external device 2 may include a load such as an inverter and a converter, and a charging device. When the external device 2 is a charger, both ends P+ and P- of the battery system 1 may be connected to the charger and charged by receiving power from the charger. Hereinafter, when the external device 2 is a charger, both ends P+ and P- of the battery system 1 are connected to the charger to receive power from the charger, and charged, which is refers to as a "charging operation".

When the external device 2 is a load, both ends P+ and P- of the battery system 1 are connected to the load so that the power supplied by the battery device 100 may be discharged through the load. Hereinafter, the operation of supplying power from the battery device 100 to a load and reducing the charge of the battery device 100 is referred to as a "discharge operation".

In one exemplary embodiment, each of the plurality of battery cells included in each of the plurality of battery packs 101 to 106 may be a lithium metal battery using lithium (Li) metal as a negative electrode. Specifically, a negative electrode material of each of the plurality of battery cells included in each of the plurality of battery packs 101 to 106 may include lithium in a metallic phase.

During the discharge process of a lithium metal battery, an oxidation reaction occurs in which the lithium metal contained in the negative electrode material of the lithium metal battery is stripped and moved to a positive electrode through the electrolyte.

When the lithium metal is stripped from a particular location on the lithium metal of the negative electrode material, the location where the lithium metal has already been stripped, a corner of the lithium deposit, a point of high curvature in the lithium deposit, and the like may be in the state where another lithium metal ion is susceptible to stripping. Further, in a lithium metal battery discharged at a low discharge rate, the stripping from the surface of the lithium metal is not uniform and metal ions may be stripped at locations that are prone to stripping compared to a lithium metal battery discharged at a high discharge rate.

During the charging and discharging process of the lithium metal battery, irregular lithium ions on the surface of the negative electrode due to irregular deposition of lithium metal or irregular stripping of lithium ions may result in the formation of lithium dendrites pointing from the negative electrode surface toward the positive electrode surface. When a lithium metal battery is repeatedly charged and discharged, these lithium dendrites may accumulate excessively and infiltrate a separator, causing an internal short circuit between the negative electrode and the positive electrode.

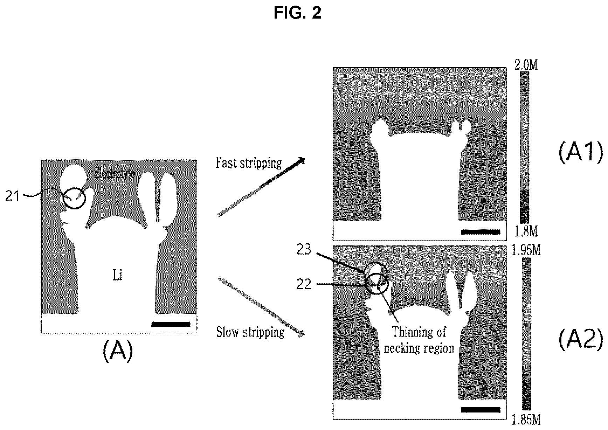

Hereinafter, the lithium stripping operation of a lithium metal battery based on a difference in discharge rate will be described with reference to FIG. 2.

FIG. 2 is a diagram illustrating a shape of a lithium metal surface according to a difference in stripping rate of a lithium metal battery.

(A) in FIG. 2 may represent the shape of a lithium deposit, which is an irregular deposition on lithium metal through charging of a lithium metal battery. Referring to (A) of FIG. 2, the irregular deposition of the lithium metal may include a narrow spot 21.

When the lithium metal is stripped from the lithium deposit illustrated in (A) of FIG. 2 at a high rate, the lithium metal may return to the shape illustrated in (A1) of FIG. 2 with a high degree of reversibility, such that most of the irregular deposits of the lithium metal have been removed.

In comparison, when the lithium metal is stripped from the lithium deposit illustrated in (A) of FIG. 2 at a relatively low rate, stripping actively occurs at corners or points of high curvature of the lithium deposit like the shape illustrated in (A2) of FIG. 2, and the irregular deposit of the lithium metal may be more irregularly stripped.

Referring to (A2) of FIG. 2, the irregular deposition of the lithium metal with slow stripping may include a narrow spot 22.

The narrow spot 22 included in (A2) of FIG. 2 is further narrowed from the narrow spot 21 included in (A) of FIG. 2, such that a region 23 separated from the lithium deposit by the narrow spot 22 may be separated from the lithium deposit. Further, due to the irregular surface, lithium dendrites may also form easily.

As the discharge rate of the lithium metal battery increases, the stripping rate of the lithium metal contained in the lithium metal battery may become fast and uniform. In contrast, when the lithium metal battery is discharged at a low discharge rate below a predetermined level, the stripping of the lithium metal (or deposits of the lithium metal) contained in the lithium metal battery from the surface is unlikely to be uniform, and there is a high possibility that lithium dendrite is formed on the surface of the lithium metal.

Specifically, the irregular growth of the lithium metal may mainly result from changes in the current density on the surface, and
when the lithium metal battery is operated in an environment with a stripping rate that is slower than the deposition rate on the lithium metal, there is a possibility that lithium fragments may be disconnected from the irregularly grown lithium metal. This lithium fragment formation may increase the rate of degradation that reduces the total capacity of the lithium metal battery cell.

In this way, when the lithium metal battery is discharged at a low discharge rate less than a predetermined level, premature degradation phenomenon of the lithium metal battery cells may occur. When a first discharge rate is less than a second discharge rate, each of the plurality of battery packs 101 to 106 is more likely to experience premature degradation when discharged at the first discharge rate than when discharged at the second discharge rate. In other words, in terms of degradation of the lithium metal battery, a higher discharge rate is advantageous. Based on this, the BMS 200 according to the exemplary embodiment may control the discharge of the plurality of battery packs 101 to 106 such that the plurality of battery packs 101 to 106 is discharged at a high discharge rate equal to or greater than a predetermined level.

Alternatively, in some exemplary embodiments, each of the plurality of battery cells included in each of the plurality of battery packs 101 to 106 may be a lithium-sulfur secondary battery. Specifically, the negative electrode material of each of the plurality of battery cells included in each of the plurality of battery packs 101 to 106 may include lithium in a metallic phase, and the positive electrode material of each of the plurality of battery cells may include elemental sulfur (for example, S8), or a sulfur-containing complex having a sulfur-sulfur bond, as the positive electrode active material.

During the discharge process of the lithium-sulfur secondary battery, successive reduction reactions of sulfur (for example, S₈) contained in the positive electrode and successive oxidation reactions of metallic lithium contained in the negative electrode occur within each electrode and electrolyte. As the successive oxidation/reduction reactions occur, multiple species of lithium polysulfide (LiPS) may be formed in the electrolyte and move between the electrodes, and the final solid-state lithium sulfide (Li₂S) may be deposited on the negative electrode.

However, in the process of forming lithium polysulfide by the successive oxidation/reduction reaction, a part of the lithium polysulfide dissolved in the electrolyte may have a side reaction and the like with the negative electrode, which may be a factor in reducing the life characteristics of the lithium-sulfur secondary battery.

As such, the frequency of occurrence of the side reactions occurring by the part of the lithium polysulfide dissolved in the electrolyte with the negative electrode, increases as the discharge time is long. In other words, in order to reduce the frequency of occurrence of side reactions, it is necessary to control the discharge rate by shortening the discharge time of the lithium-sulfur secondary battery cell. When the lithium-sulfur secondary battery cell enters a rest state during discharge and then discharges again, the overall discharge time increases compared to the case where the lithium-sulfur secondary battery cell has no rest state. This may increase the frequency of occurrence of side reactions. Therefore, increasing the discharge rate of the lithium-sulfur secondary battery cell to achieve a shorter discharge time may be advantageous in terms of the lifetime of the lithium-sulfur secondary battery.

Thus, when any one of the plurality of pack groups is in the discharge operation, the BMS 200 may monitor an on-pack voltage to ensure that the lithium-sulfur secondary battery cells are discharged with a short discharge time without having rest until fully discharged during the discharge. Hereinafter, the on-pack voltage refers to the pack voltage of at least one battery pack connected with the switch which is turned on among the plurality of switches SW1 to SW6.

Based on the characteristics of the lithium metal battery and the lithium-sulfur secondary battery described above, the operation of the battery system 1 will be described below.

The BMS 200 may divide the plurality of battery packs 101 to 106 into a plurality of pack groups, and determine at least one pack group to discharge among the plurality of pack groups. The BMS 200 may control that power is provided to the load from at least one determined pack group. The BMS 200 may determine the number of pack groups to discharge among the plurality of pack groups based on a discharge rate of the battery device 100 for supplying the power required by the load (hereinafter, the "discharge rate of the battery device 100 required by the load") and a reference discharge rate of the battery pack. The reference discharge rate of the battery pack may be a range of discharge rates for each of the plurality of battery packs 101 to 106 that are less susceptible to degradation of each of the plurality of battery packs 101 to 106.

In supplying the power to the load, the BMS 200 may discharge only some of the pack groups at a high discharge rate (C-rate), rather than discharging all of the plurality of pack groups. Hereinafter, the discharge rate of the battery device 100 required by the load is referred to as the load discharge rate, and the unit of the discharge rate (C-rate) is "C". The power required by the load may be determined by the maximum power of the load.

It is assumed that the number of battery packs included in the battery device 100 is m (where m is a natural number equal to or greater than 2), and m=n*p (where n and p are natural numbers equal to or greater than 1). 'n' may be the number of pack groups when m battery packs are grouped into 'p' units. The BMS 200 may divide the m battery packs into n pack groups and sequentially discharge each of the n pack groups. Each of the n pack groups includes p battery packs.

When one of the n pack groups is in the discharge operation, the discharge rate of each of the p battery packs in the discharge-operating pack group may be n times the discharge rate of the battery device 100 required by the load.

For example, when the discharge rate of the battery device 100 required by the load is 0.1C, and the number n of pack groups is three, the BMS 200 may determine that the discharge rate of each of the three pack groups is 0.3C when discharging one of the three pack groups sequentially, and control the discharge rate of each of the battery packs belonging to each pack group to be 0.3C.

In some exemplary embodiments, the number n of pack groups n may be pre-stored in the BMS 200. In the exemplary embodiment, the BMS 200 may determine the number n of pack groups based on the discharge rate of the battery device 100 required by the load and the reference discharge rate of the battery pack.

In the exemplary embodiment, the BMS 200 may pre-store a discharge rate of the battery device 100 required by the load and a reference discharge rate of the battery pack. The BMS 200 may derive the number n of pack groups based on the pre-stored discharge rate of the battery device 100 required by the load and the pre-stored reference discharge rate of the battery pack. Further, based on the derived number n of pack groups and the number m of the plurality of battery packs 101 to 106, the BMS 200 may derive the number p of battery packs belonging to each of the n pack groups, and sequentially discharge each of the n pack groups. The BMS 200 may also determine the p battery packs that belong to each of the n pack groups. In this case, each of the n pack groups may perform the discharge operation at a discharge rate that falls within the reference discharge rate.

For example, when the reference discharge rate of the battery pack is 0.3C to 1C, the number of plurality of battery packs configuring the battery device 100 is six, and the discharge rate of the battery device 100 required by the load is 0.2C, the BMS 200 may calculate that 0.2C*n is within the range of 0.3 to 1, and n is a natural number capable of dividing 6. Depending on the calculation, n may be either 2 or 3. That is, the BMS 200 may divide the six battery packs into two groups or three groups.

Alternatively, in some exemplary embodiments, the BMS 200 may receive a signal from the external device 2 indicating a discharge rate of the battery device 100 required by the load, determine a discharge rate of the battery device 100 based on the received signal, and derive the number n of pack groups based on the determined discharge rate of the battery devices 100 and the reference discharge rate of the battery pack.

In the exemplary embodiment, when each of the plurality of battery cells included in each of the plurality of battery packs 101 to 106 is a lithium-sulfur secondary battery, the BMS 200 may improve the life of the plurality of discharge-operating battery cells by ensuring that the p battery packs included in a pack group that have begun the discharge operation among n pack groups, remain in a discharge state until the discharge is complete without resting in the middle of the discharge.

In this case, the operation of discharging, by the BMS 200, each of the n pack groups may include an operation of sequentially discharging m battery packs by p packs by discharging one pack group among the n pack groups, and repeating discharging the operation of discharging another pack group among the n pack groups subsequently when the discharge is completed. The operation of the BMS 200 to discharge one pack group may represent the operation of the BMS 200 to discharge each of the p battery packs by turning on a switch connected with each of the p battery packs belonging to the one pack group.

In the specification, complete discharge may refer to a state in which at least one of the pack voltages of the respective p battery packs is equal to or less than a predetermined discharge voltage lower limit. The predetermined discharge voltage lower limit may be a predetermined value or a predetermined range indicating that the battery pack is completely discharged. For example, in the exemplary embodiment, the predetermined discharge voltage lower limit may be 1.5 to 1.9 V, and in some exemplary embodiments, the predetermined discharge voltage lower limit may be 1.8 V.

When a pack group belonging to one of the plurality of pack groups is in the discharge operation, the BMS 200 does not make the pack group rest until each of the p battery packs belonging to the discharge-operating pack group reaches a discharge voltage lower limit, and when at least one of the pack voltages of the p battery packs reaches the discharge voltage lower limit, the BMS 200 may terminate the discharge of the discharge-operating pack group and begin the discharge operation of another pack group among the plurality of pack groups.

The BMS 200 may determine which of the plurality of pack groups to perform the discharge operation, and may turn on a switch connected to the determined pack group among the plurality of switches SW1 to SW6. Then, the corresponding battery pack may be connected to a node N1. The discharge operation may include an operation of supplying power to an external source. Here, when the number of at least one battery pack to perform the discharge operation among the plurality of battery packs 101 to 106 is two or more, the battery packs may be connected in parallel with each other.

One end of each of the plurality of switches SW1 to SW6 may be connected to each other at the node N1, and the other ends of the plurality of switches SW1to SW6 may be connected in series to the one ends of the plurality of battery packs 101 to 106, respectively.

In FIG. 1, the plurality of battery packs 101 to 106 is illustrated as including the plurality of battery cells, and the plurality of switches SW1 to SW6 is connected to the plurality of battery packs 101 to 106 in parallel, but this is for convenience of illustration, and in some exemplary embodiments, the plurality of switches SW1 to SW6 may be connected to the battery cells, respectively. When each of the plurality of switches SW1 to SW6 is connected to a respective battery cell, the description for the pack in the description of the battery system 1 in this specification may be replaced with the description of the cell.

One end of the switch SW1 is connected to a relay 300 at the node N1, and the other end of the switch SW1 is connected to a positive electrode terminal of the battery pack 101. One end of the switch SW2 is connected to the relay 300 at the node N1, and the other end of the switch SW2 is connected to the positive electrode terminal of the battery pack 102. One end of the switch SW3 is connected to the relay 300 at the node N1, and the other end of the switch SW3 is connected to the positive electrode terminal of the battery pack 103. One end of the switch SW4 is connected to the relay 300 at the node N1, and the other end of the switch SW4 is connected to the positive electrode terminal of the battery pack 104. One end of the switch SW5 is connected to the relay 300 at the node N1, and the other end of the switch SW5 is connected to the positive electrode terminal of the battery pack 105. One end of the switch SW6 is connected to the relay 300 at the node N1, and the other end of the switch SW6 is connected to the positive electrode terminal of the battery pack 106.

The BMS 200 may turn on a switch connected to a battery pack to be discharged among the plurality of battery packs 101 to 106, and monitor the voltage of the discharge-operating battery pack. The BMS 200 may receive the plurality of voltage measurement signals VS1 to VS6 from the one ends of the plurality of battery packs 101 to 106, respectively. The BMS 200 is connected to each of the plurality of battery packs 101 to 106 through a plurality of wires LN1 to LN6, respectively.

The BMS 200 may include a plurality of terminals P1 to P6. The plurality of terminals P1 to P6 is connected to one ends of the plurality of battery packs 101 to 106 through the plurality of wires LN1 to LN6, respectively. The BMS 200 may receive the plurality of voltage measurement signals VS1 to VS6 through the plurality of terminals P1 to P6.

The positive electrode terminal of the battery pack 101 may be connected to the terminal P1 through the wire LN1, and the BMS 200 may obtain the voltage measurement signal VS1 measured from the positive electrode terminal of the battery pack 101 through the terminal P1. The positive electrode terminal of the battery pack 102 may be connected to the terminal P2 through the wire LN2, and the BMS 200 may obtain the voltage measurement signal VS2 measured from the positive electrode terminal of the battery pack 102 through the terminal P2. The positive electrode terminal of the battery pack 103 may be connected to the terminal P3 through the wire LN3, and the BMS 200 may obtain the voltage measurement signal VS3 measured from the positive electrode terminal of the battery pack 103 through the terminal P3. The positive electrode terminal of the battery pack 104 may be connected to the terminal P4 through the wire LN4, and the BMS 200 may obtain the voltage measurement signal VS4 measured from the positive electrode terminal of the battery pack 104 through the terminal P4. The positive electrode terminal of the battery pack 105 may be connected to the terminal P5 through the wire LN5, and the BMS 200 may obtain the voltage measurement signal VS5 measured from the positive electrode terminal of the battery pack 105 through the terminal P5. The positive electrode terminal of the battery pack 106 may be connected to the terminal P6 through the wire LN6, and the BMS 200 may obtain the voltage measurement signal VS6 measured from the positive electrode terminal of the battery pack 106 through the terminal P6.

The BMS 200 may derive a pack voltage of the plurality of battery packs 101 to 106 from the plurality of voltage measurement signals VS1 to VS6, respectively. The BMS 200 may monitor the pack voltage of a battery pack connected to a closed switch among the plurality of switches SW1 to SW6, among the plurality of battery packs 101 to 106.

When at least one of the pack voltages of the at least one battery packs in the discharge-operating pack group is equal to or less than the predetermined discharge voltage lower limit as a result of the monitoring, the BMS 200 may turn off the switch connected with each of the battery packs in the discharge-operating pack group and turn on the switch connected with each of the battery packs in the pack group to be discharged next.

In the charging operation, the BMS 200 transmits on-level switch control signals SS1 to SS6 to the plurality of switches SW1 to SW6, and when the plurality of switches SW1 to SW6 is closed, the plurality of battery packs 101 to 106 may be charged.

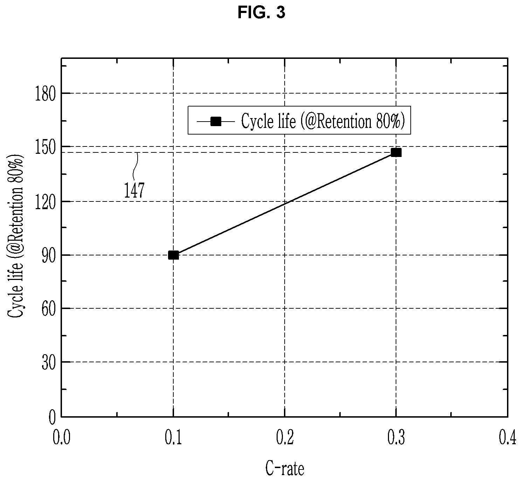

FIG. 3 is a graph illustrating the relationship between a discharge rate and lifetime of a lithium metal battery.

Referring to FIG. 3, the following describes the cycle life of the battery according to the C-rate, which represents the discharge rate of the battery, under the condition that the residual life retention is 80%. A cycle life of the battery is 90 cycles when a discharge rate (C-rate) is 0.1C, and a cycle life of the battery is 147 cycles when a discharge rate (C-rate) is 0.3C. Thus, when the C-rate increases three times from 0.1C to 0.3C, the cycle life of the battery increases 63.33% from 90 cycles to 147 cycles.

In one exemplary embodiment, the BMS 200 may divide the plurality of battery packs 101 to 106 into n pack groups for the discharge operation to cause only a portion of the plurality of battery packs 101 to 106 to discharge. The discharge rate of the battery device 100 may be a value obtained by dividing the sum of the discharge rates of the discharge-operating battery packs by the number of battery packs 101 to 106. For example, when each of the plurality of battery packs 101 to 106 has a discharge rate of 0.3C, and only two of the six battery packs 101 to 106 are allowed to discharge, the discharge rate of the battery device 100 is 0.3*2/6=0.1C. Thus, in one exemplary embodiment, the discharge rate of each of the plurality of battery packs 101 to 106 may be higher than the discharge rate of the battery device 100, so that it is possible to provide the battery system 1 that is advantageous in terms of the lifetime of each of the plurality of battery packs 101 to 106.

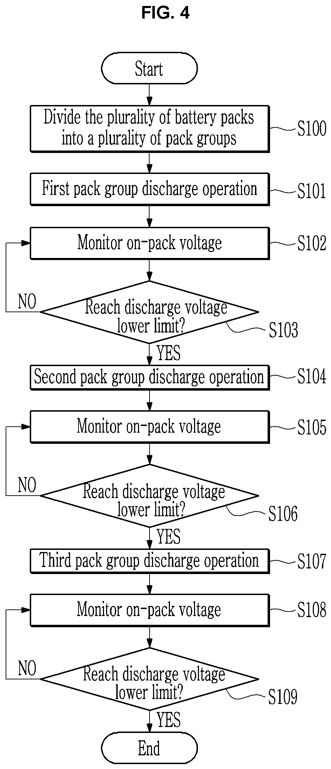

FIG. 4 is a flowchart of a pack connection method using the battery system according to an exemplary embodiment.

In the following, redundant descriptions of the above-described battery system 1 may be omitted.

When the battery system 1 begins the discharge operation, the BMS 200 may divide the plurality of battery packs 101 to 106 into a plurality of pack groups (S100). In the BMS 200, information about the number n of pack groups may be pre-stored, or the BMS 200 may determine the number of the plurality of pack groups based on a discharge rate of the battery device 100 required by a load and a reference discharge rate of the battery pack. The BMS 200 may determine at least one battery pack belonging to each of the plurality of pack groups. The BMS 200 may sequentially discharge each of the plurality of pack groups.

The BMS 200 may only discharge at least one battery pack belonging to one pack group among the plurality of battery packs 101 to 106, and leave the rest battery packs in a rest state. Thus, when the number of the plurality of pack groups is n, each of the plurality of discharge-operating battery packs 101 to 106 may be discharged at a discharge rate n times the discharge rate of the battery device 100.

For example, when the BMS 200 divides the plurality of battery packs into two pack groups (n=2), each of the at least one battery packs in the pack group that is in the discharge operation may have a discharge rate that is twice the discharge rate of the battery device 100, that is, an increase of 100% based on the discharge rate of the battery device 100. When the BMS 200 divides the plurality of battery packs into three pack groups (n=3), each of the at least one battery packs in the pack group that is in the discharge operation may have a discharge rate that is three times the discharge rate of the battery device 100, that is, an increase of 200% based on the discharge rate of the battery device 100. When the BMS 200 divides the plurality of battery packs into four pack groups (n=4), each of the at least one battery packs in the pack group that is in the discharge operation may have a discharge rate that is four times the discharge rate of the battery device 100, that is, an increase of 300% based on the discharge rate of the battery device 100. This allows the battery system 1 to increase the discharge rate of each of the plurality of battery packs 101 to 106, thereby improving the life of the lithium metal battery.

Hereinafter, for ease of description, it is assumed that the number of battery packs included in the battery device 100 is referred to as m=6, the number of pack groups is referred to as n=3, and the number of battery packs included in each of the three pack groups is referred to as p=2. Further, each of the plurality of battery packs 101 to 106 may be a first to sixth battery pack.

The BMS 200 may divide the six battery packs 101 to 106 into three pack groups. The BMS 200 may divide the plurality of battery packs 101 to 106 into three pack groups, that is, first to third pack groups, and determine battery packs belonging to each of the three pack groups. For example, the BMS 200 may generate a first pack group including first and second battery packs 101 and 102, a second pack group including third and fourth battery packs 103 and 104, and a third pack group including fifth and sixth battery packs 105 and 106.

When the plurality of pack groups discharge in predetermined discharge cycles, the BMS 200 may determine an order in which the plurality of pack groups is discharged in each cycle (hereinafter, the "plurality of discharge orders"). Here, a discharge cycle may refer to the number of times the battery device 100 is discharged from a fully charged state to a fully discharged state. Here, the state in which the battery device 100 is fully charged may represent a state in which all of the pack voltages of the plurality of battery packs 101 to 106 are equal to or greater than a predetermined charge voltage upper limit, and the state in which the battery device 100 is fully discharged may represent a state in which all of the n pack groups include battery packs that are equal to or less than a discharge voltage lower limit. The predetermined charge voltage upper limit may be a predetermined value or a predetermined range that indicates the battery pack is fully charged.

The BMS 200 may determine a plurality of discharge patterns such that the average of the rest time before discharge and/or the average of the rest time after discharge is uniform in the discharge pattern cycle for the plurality of pack groups. The discharge pattern cycle means a cycle in which the plurality of discharge patterns for the plurality of pack groups are performed. For example, the first discharge pattern for the plurality of pack groups is the order of the first pack group, the second pack group, and the third pack group, the second discharge pattern is the order of the second pack group, the third pack group, and the first pack group; and the third discharge pattern is the order of the third pack group, the first pack group, and the second pack group. One discharge pattern cycle may include the first discharge pattern, the second discharge pattern, and the third discharge pattern, and the discharge pattern cycle may be repeated.

The BMS 200 may calculate an average of the rest time before discharge for one pack group by dividing a value obtained by summing the rest time before discharge for one pack group in each of the plurality of discharge patterns in the discharge pattern cycle for one pack group by the number of the plurality of discharge patterns.

The BMS 200 may determine the plurality of discharge patterns such that the difference between the average of the rest time before discharge of any one of the plurality of pack groups and the average of the rest time before discharge of any other one of the plurality of pack groups is decreased. The BMS 200 may determine the plurality of discharge patterns such that the difference between the average of the rest time after discharge of any one of the plurality of pack groups and the average of the rest time after discharge of any other one of the plurality of pack groups is decreased.

In the following, it is assumed that the number of the plurality of discharge patterns is n.

The BMS 200 may determine n different discharge patterns corresponding to one discharge pattern cycle.

The BMS 200 may determine the discharge pattern cycles such that the average of the rest time before discharge of any one of the plurality of pack groups in each discharge pattern is the same as the average of the rest time before discharge of any other one of the plurality of pack groups in each discharge pattern and/or the average of the rest time after discharge of any one of the plurality of pack groups in each discharge pattern is the same as the average of the rest time after discharge of any other one of the plurality of pack groups in each discharge pattern.

For example, it is assumed that in the first discharge pattern cycle, the discharge time for each pack group is 1 hour, and herein, in the first discharge pattern cycle, for the plurality of pack groups, the first discharge pattern is the order of the first pack group, the second pack group, and the third pack group, the second discharge pattern is the order of the second pack group, the third pack group, and the first pack group; and the third discharge pattern is the order of the third pack group, the first pack group, and the second pack group.

Each pack group may be determined as resting while the other pack groups are being discharged. The rest time before discharge for the first pack group is 0 hour, 2 hours, and 1 hour for the first through third discharge patterns, respectively, so the average of the rest time before discharge for the first pack group in the first discharge pattern cycle is 1 hour. The rest time before discharge for the second pack group is 1 hour, 0 hour, and 2 hours for the first through third discharge patterns, respectively, so the average of the rest time before discharge for the second pack group in the first discharge pattern cycle is 1 hour. The rest time before discharge for the third pack group is 2 hours, 1 hour, and 0 hour for the first through third discharge patterns, respectively, so the average of the rest time before discharge for the third pack group in the first discharge pattern cycle is 1 hour. Therefore, the average of the rest time of any one of the plurality of pack groups before discharge in each discharge pattern is the same as the average of the rest time of any other one of the plurality of pack groups before discharge in each discharge pattern.

Similarly, the rest time after discharge for the first pack group is 2 hours, 0 hour, and 1 hour for the first through third discharge patterns, respectively, so the average of the rest time after discharge for the first pack group in the first discharge pattern cycle is 1 hour. Further, the rest time after discharge for the second pack group is 1 hour, 2 hours, and 0 hour for the first through third discharge patterns, respectively, so the average of the rest time after discharge for the second pack group in the first discharge pattern cycle is 1 hour. Similarly, the rest time after discharge for the third pack group is 0 hour, 1 hour, and 2 hours for the first through third discharge patterns, respectively, so the average of the rest time after discharge for the third pack group in the first discharge pattern cycle is 1 hour. Therefore, the average of the rest time of any one of the plurality of pack groups after discharge in each discharge pattern is the same as the average of the rest time of any other one of the plurality of pack groups after discharge in each discharge pattern.

When the BMS 200 determines the plurality of discharge patterns in the discharge pattern cycle, the BMS 200 may perform the discharge operation for the plurality of pack groups sequentially according to the discharge pattern cycle.

Hereinafter, when the BMS 200 determines a first discharge pattern of the order of the first pack group, the second pack group, and the third pack group, an operation in which the BMS 200 discharges each of the plurality of pack groups sequentially according to the first discharge pattern will be described with reference to operations S101 to S109.

The BMS 200 may discharge the first pack group according to the first discharge pattern (S101). The BMS 200 may turn on the switches SW1 and SW2 connected to the first battery pack 101 and the second battery pack 102 belonging to the first pack group through the plurality of switches SW1 to SW6, and turn off the switches SW3 to SW6 connected to the third to sixth battery packs 103 to 106.

The BMS 200 may close the switches SW1 and SW2 by transmitting on-level switch control signals SS1 and SS2 to the switches SW1 and SW2. The BMS 200 may open the switches SW3 to SW6 by transmitting off-level switch control signals SS3 to SS6 to the switches SW3 to SW6. Herein, the third to sixth battery packs 103 to 106, which are off, may be considered as being in a rest state.

The BMS 200 may monitor an on-pack voltage (S102). The on-pack voltages in operations S102 and S103 includes the pack voltage of each of the first battery pack 101 and the second battery pack 102. The BMS 200 may derive the on-pack voltage from voltage measurement signals VS1 and VS2.

The BMS 200 may determine whether at least one of the on-pack voltages has reached a predetermined discharge voltage lower limit (S103).

In the following, determining whether at least one of the on-pack voltages has reached the predetermined discharge voltage lower limit is intended to ensures that the lithium-sulfur secondary battery cell as described above becomes the rest state during discharge and then the discharge-operating battery pack is discharged to the discharge voltage lower limit without discharging again to be advantageous in terms of the life of the lithium-sulfur secondary battery.

The BMS 200 may also monitor the pack voltage of each of the plurality of battery packs 101 to 106 to determine whether the plurality of pack groups all include battery packs having the voltages that are equal to or less than the discharge voltage lower limit. When the plurality of pack groups all include the battery packs having the voltages that are equal to or less than the discharge voltage lower limit, the BMS 200 may terminate the discharge operation.

When at least one of the on-pack voltages does not reach the predetermined discharge voltage lower limit in operation S103, operation S102 may be repeated.

When at least one of the on-pack voltages reaches the predetermined discharge voltage lower limit in operation S103, the BMS 200 may turn off the switches connected with each of the battery packs belonging to the discharge-operating first pack group and cause the second pack group, which is the next discharge sequence according to the first discharge pattern, to discharge (S104). The BMS 200 may turn on the switches SW3 and SW4 connected to the third battery pack 103 and the fourth battery pack 104 belonging to the second pack group through the plurality of switches SW1 to SW6, and turn off the switches SW1, SW2, SW5, and SW6 connected to the first, second, fifth, and sixth battery packs 101, 102, 105, and 106.

The BMS 200 may transmit the on-level switch control signals SS3 and SS4 to the switches SW3 and SW4 to close the switches SW3 and SW4. The BMS 200 may transmit the off-level switch control signals SS1, SS2, SS5, and SS6 to the switches SW1, SW2, SW5, and SW6 to open the switches SW1, SW2, SW5, and SW6. Herein, the off first, second, fifth, and sixth battery packs 101, 102, 105, and 106 may be considered as being in the rest state.

The BMS 200 may monitor the on-pack voltage (S105). The on-pack voltage in operations S105 and S106 includes the pack voltage of each of the third battery pack 103 and the fourth battery pack 104. The BMS 200 may derive the on-pack voltage from voltage measurement signals VS3 and VS4.

The BMS 200 may determine whether at least one of the on-pack voltages has reached the predetermined discharge voltage lower limit (S106).

The BMS 200 may also monitor the pack voltage of each of the plurality of battery packs 101 to 106 to determine whether the plurality of pack groups all include battery packs having the voltages that are equal to or less than the discharge voltage lower limit. When the plurality of pack groups all include the battery packs having the voltages that are equal to or less than the discharge voltage lower limit, the BMS 200 may terminate the discharge operation.

When at least one of the on-pack voltages does not reach the predetermined discharge voltage lower limit in operation S106, operation S105 may be repeated.

When at least one of the on-pack voltages reaches the predetermined discharge voltage lower limit in operation S106, the BMS 200 may turn off the switches connected with each of the battery packs belonging to the discharge-operating second pack group and cause the third pack group, which is the next discharge sequence according to the first discharge pattern, to discharge (S107). The BMS 200 may turn on the switches SW5 and SW6 connected to the fifth battery pack 105 and the sixth battery pack 106 belonging to the third pack group through the plurality of switches SW1 to SW6, and turn off the switches SW1 to SW4 connected to the first to fourth battery packs 101 to 104.

The BMS 200 may transmit the on-level switch control signals SS5 and SS6 to the switches SW5 and SW6 to close the switches SW5 and SW6. The BMS 200 may open the switches SW1 to SW4 by transmitting the off-level switch control signals SS1 to SS4 to the switches SW1 to SW4. Herein, the first to fourth battery packs 101 to 104, which are off, may be considered as being in a rest state.

The BMS 200 may monitor the on-pack voltage (S108). The on-pack voltage in operations S108 and S109 includes the pack voltage of each of the fifth battery pack 105 and the sixth battery pack 106. The BMS 200 may derive the on-pack voltage from voltage measurement signals VS5 and VS6.

The BMS 200 may determine whether at least one of the on-pack voltages has reached the predetermined discharge voltage lower limit (S109).

The BMS 200 may also monitor the pack voltage of each of the plurality of battery packs 101 to 106 to determine whether the plurality of pack groups all include battery packs having the voltages that are equal to or less than the discharge voltage lower limit. When the plurality of pack groups all include the battery packs having the voltages that are equal to or less than the discharge voltage lower limit, the BMS 200 may terminate the discharge operation.

When at least one of the on-pack voltages does not reach the predetermined discharge voltage lower limit in operation S109, operation S108 may be repeated.

When at least one of the on-pack voltages reaches the predetermined discharge voltage lower limit in operation S109, the BMS 200 may terminate the discharge operation according to the first discharge pattern.

In some exemplary embodiments, when at least one of the on-pack voltages reaches the predetermined discharge voltage lower limit in operation S103, S106, or S109, the BMS 200 may monitor the pack voltage of each of the plurality of battery packs 101 to 106 to determine whether the plurality of pack groups all include the battery packs having the voltages that are equal to or less than the discharge voltage lower limit. When at least one of the on-pack voltages reaches the predetermined discharge voltage lower limit in operation S103, S106, or S109, and the plurality of pack groups all include the battery packs having the voltages that are equal to or less than the discharge voltage lower limit, the BMS 200 may terminate the discharge operation according to the first discharge pattern. When at least one of the on-pack voltages reaches the predetermined discharge voltage lower limit in operation S103, S106, or S109, and there is a pack group in the plurality of pack groups that does not include a battery pack having the voltage that is equal to or less than the discharge voltage lower limit, the BMS 200 may cause the pack group in the plurality of pack groups that does not include the battery pack having the voltage that is equal to or less than the discharge voltage lower limit to discharge according to the discharge sequence of the first discharge pattern.

When at least one of the on-pack voltages reaches the predetermined discharge voltage lower limit in operation S109, the plurality of pack groups all include the battery packs having the voltages that are equal to or less than the discharge voltage lower limit, so that the BMS 200 terminates the discharge operation according to the first discharge pattern. When the discharge operation according to the first discharge pattern is pattern terminated, the BMS 200 may turn off the plurality of switches SW1 to SW6.

When the discharge operation is performed through operations S101 to S109, each of the plurality of battery packs 101 to 106 may be in a rest state for a period of time obtained by multiplexing a value obtained by subtracting 1 from the number of the plurality of pack groups with the discharge time of each of the plurality of battery packs 101 to 106. When the number of the plurality of pack groups is n, and the discharge time of each of the plurality of battery packs 101 to 106 is t1 (unit: sec), the rest period of each of the plurality of battery packs 101 to 106 may be t1*(n-1) (unit: sec).

For example, assuming that the discharge time of each of the plurality of battery packs 101 to 106 is 1 hour and the number of the plurality of pack groups is 3, the first battery pack 101 is in the discharge operation for a period corresponding to operations S101 to S103 and is in a rest state for a period corresponding to operations S104 to S109, so the first battery pack 101 has a rest period equal to 1(h)*2 = 2 hours. As such, each of the plurality of battery packs 101 to 106 may have a rest period of several hours.

As such, the BMS 200 may cause each of the plurality of pack groups to sequentially discharge according to the plurality of discharge patterns in the discharge pattern cycle.

In one exemplary embodiment, the BMS 200 may determine the number n of pack groups based on the discharge rate of the battery device 100 required by the load and the reference discharge rate of the battery pack.

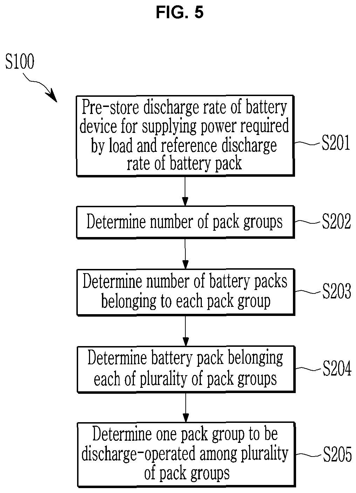

Hereinafter, the method of dividing, by the BMS 200, m battery packs based on the discharge rate of the battery device 100 required by the load and the reference discharge rate of each of the plurality of packs to derive the number n of pack groups to be discharged, and determining a discharge pattern cycle in operation S100 of FIG. 4 will be described with reference to FIG. 5.

FIG. 5 is a detailed flowchart of operation S100 of FIG. 4.

In the following, redundant descriptions of the above-described battery system 1 may be omitted.

In the BMS 200, a discharge rate C_DEVICE of the battery device 100 required by a load and a reference discharge rate C_PK of the battery pack may be stored in advance (S201).

The BMS 200 may determine a value obtained by dividing the reference discharge rate C_PK of each of the plurality of battery packs 101 to 106 by the discharge rate C_DEVICE of the battery device 100 required by the load, as the number n of pack groups (S202).

For example, when the discharge rate C_DEVICE of the battery device 100 required by the load is 0.1 [C], and the reference discharge rate C_PK of each of the plurality of battery packs 101 to 106 is 0.3 [C], the number n of pack groups = C_PK/C_DEVICE = 3.

Based on the number n of pack groups and the number m of the plurality of battery packs 101 to 106, the BMS 200 may derive the number p of battery packs belonging to each of the n pack groups (S203).

For example, when the number n of pack groups is 3 and the number m of battery packs 101 to 106 is 6, the number of battery packs belonging to each pack group is p=m/n=2.

The BMS 200 may determine a battery pack belonging to each of the n pack groups based on the number n of pack groups, or based on the number n of pack groups and the number p of battery packs belonging to each of the n pack groups (S204).

The BMS 200 may determine a battery pack belonging to each pack group by any method that ensures that the plurality of battery packs 101 to 106 belongs equally to each of the n pack groups.

For example, the BMS 200 may determine the first and second battery packs 101 and 102 among the plurality of battery packs 101 to 106 as a first pack group, the third and fourth battery packs 103 and 104 as a second pack group, and the fifth and sixth battery packs 105 and 106 as a third pack group.

The BMS 200 may determine one pack group to be discharged among the plurality of pack groups (S205).

In determining one pack group to be discharged, the BMS 200 may determine a plurality of discharge patterns that configures a discharge pattern cycle for the plurality of pack groups to determine one pack group to be discharged among the plurality of pack groups.

The BMS 200 may determine a plurality of discharge patterns such that the average of the pre-discharge rest time and/or the average of the post-discharge rest time is uniform in the discharge pattern cycle for the plurality of pack groups.

In the specification, it has been described as the plurality of pack groups includes at least one battery pack including one or more battery cells, but this is for convenience of description only and the invention is not limited thereto.

In some exemplary embodiments, each of the plurality of pack groups may represent one battery cell each, in which case at least one battery pack belonging to each of the plurality of pack groups may be replaced by each battery cell, and the pack voltage may be replaced by the cell voltage of each battery cell. In other words, the BMS 200 may make the discharge rate of the battery cell at which the discharging operation is performed such that only one cell among the plurality of battery cells is discharged and the switches connected to the remaining plurality of cells are turned off be within the reference discharge rate.

While the present disclosure has been described in connection with what is presently considered to be practical exemplary embodiments, it is to be understood that the invention is not limited to the disclosed exemplary embodiments.

## Claims

1. A battery system, comprising:
a battery device including a plurality of battery packs connected in parallel;
for each of the plurality of battery packs, a plurality of switches connected in series to one of both ends of each battery pack; and
a battery management system (BMS) performing operations comprising:
dividing the plurality of battery packs into a plurality of pack groups;
determining at least one battery pack belonging to each of the plurality of pack groups;
determining one pack group of the plurality of pack groups to be discharged; and
transmitting a switch control signal for turning on at least one switch connected with the one pack group among the plurality of switches, and turning off the remaining switches among the plurality of switches except for the at least one switch,
wherein each of the plurality of battery packs includes a plurality of battery cells having a metal phase lithium in each negative electrode material.

2. The battery system of claim 1, wherein:
a discharge rate of the battery device for supplying power required by a load connected to the battery device is a first discharge rate, and
each of the plurality of pack groups discharges at a second discharge rate greater than the first discharge rate.

3. The battery system of claim 2, wherein the BMS determines:
the number of the plurality of pack groups by dividing a reference discharge rate for each of the plurality of battery packs by the discharge rate of the battery device, and
the number of battery packs belonging to each of the plurality of pack groups by dividing the number of the plurality of battery packs by the number of the plurality of pack groups.

4. The battery system of claim 1, wherein the BMS determines:
a plurality of discharge patterns constituting a discharge pattern cycle for the plurality of pack groups, such that a difference between an average rest time before discharge of any one of the plurality of pack groups and an average rest time before discharge of any other one of the plurality of pack groups is decreased.

5. The battery system of claim 4, wherein:
a positive electrode material of each of the plurality of battery cells includes elemental sulfur, and
the plurality of discharge patterns include a first discharge pattern that is an order of a first pack group and a second pack group among the plurality of pack groups, and
the BMS causes the first pack group to discharge, and monitors whether at least one of the pack voltages of the at least one first battery pack belonging to the first pack group is equal to or less than a predetermined discharge voltage lower limit.

6. The battery system of claim 5, wherein:
when at least one of the pack voltages of the at least one first battery pack is equal to or less than the predetermined discharge voltage lower limit, the BMS turns off a switch connected to each of the at least one first battery pack, causes the second pack group to discharge, and monitors whether at least one of the pack voltages of the at least one second battery pack belonging to the group of second packs is equal to or less than the predetermined discharge voltage lower limit.

7. The battery system of claim 5, wherein:
the BMS turns off the plurality of switches when all of the plurality of pack groups include battery packs having voltages equal to or less than the predetermined discharge voltage lower limit.

8. A pack connection method of a battery system including a battery device comprising a plurality of battery packs connected in parallel, the pack connection method comprising:
dividing, by a battery management system (BMS) connected to the battery device, the plurality of battery packs into a plurality of pack groups;
determining at least one battery pack belonging to each of the plurality of pack groups;
determining one pack group to be discharged among the plurality of pack groups; and
transmitting a switch control signal to cause at least one switch connected to the one pack group among the plurality of switches to be turned on, and to cause the remaining switches among the plurality of switches except the at least one switch to be turned off,
wherein each of the plurality of battery packs includes a plurality of battery cells having a metal phase lithium in each negative electrode material.

9. The pack connection method of claim 8, wherein:
a discharge rate of the battery device for supplying power required by a load connected to the battery device is a first discharge rate, and
each of the plurality of pack groups discharges at a second discharge rate greater than the first discharge rate.

10. The pack connection method of claim 8, further comprising:
determining the number of the plurality of pack groups by dividing a reference discharge rate for each of the plurality of battery packs by the discharge rate of the battery device; and
determining the number of battery packs belonging to each of the plurality of pack groups by dividing the number of the plurality of battery packs by the number of the plurality of pack groups.

11. The pack connection method of claim 8, wherein the determining of the one pack group to be discharged among the plurality of pack groups includes:
determining a plurality of discharge patterns constituting a discharge pattern cycle for the plurality of pack groups, such that a difference between an average rest time before discharge of any one of the plurality of pack groups and an average rest time before discharge of any other one of the plurality of pack groups is decreased.

12. The pack connection method of claim 11, wherein:
a positive electrode material of each of the plurality of battery cells includes elemental sulfur, and
the plurality of discharge patterns includes a first discharge pattern that is an order of a first pack group and a second pack group among the plurality of pack groups, and
the transmitting of the switch control signal includes:
causing the first pack group to discharge, and monitoring whether at least one of the pack voltages of the at least one first battery pack belonging to the first pack group is equal to or less than a predetermined discharge voltage lower limit.

13. The pack connection method of claim 12, further comprising:
when at least one of the pack voltages of the at least one first battery pack is equal to or less than the predetermined discharge voltage lower limit,
turning off a switch connected to each of the at least one first battery pack, causing the second pack group to discharge; and
monitoring whether at least one of the pack voltages of the at least one second battery pack belonging to the group of second packs is equal to or less than the predetermined discharge voltage lower limit.

14. The pack connection method of claim 12, further comprising:
when all of the plurality of pack groups include battery packs having voltages equal to or less than the predetermined discharge voltage lower limit,
turning off the plurality of switches.
